Europäisches Patentamt

European Patent Office

Office européen des brevets

(11) Publication number: 0 153 549
A1

# (12) EUROPEAN PATENT APPLICATION

(21) Application number: 84830363.2

(22) Date of filing: 28.12.84

(51) Int. Cl.⁴: **A 47 J 31/42**
**A 47 J 31/36, A 47 J 31/24**

(30) Priority: 02.02.84 IT 2069184 U

(43) Date of publication of application:
04.09.85 Bulletin 85/36

(84) Designated Contracting States:
AT BE CH DE FR GB LI NL SE

(71) Applicant: C.C.R.O. S.r.l.
Via Masotto, 23
I-20133 Milano(IT)

(72) Inventor: Cernuschi, Gianluigi C.C.R.O. S.r.l.
Via Masotto 23
I-20133 Milano(IT)

(74) Representative: Cicogna, Franco
Ufficio Internazionale Brevetti Dott.Prof. Franco Cicogna
Via Visconti di Modrone, 14/A
I-20122 Milano(IT)

(54) Instantaneously heated coffee-machine, provided with one or more dispensing assembly and effective to be coupled to a coffee-mill including a metering device.

(57) There is disclosed an instantaneously heated coffee machine, comprising an outer casing provided with flat side walls to be adjoined with the flat or planar side walls of a coffee mill (1), the coffee machine including a plurality of dispensing assemblies (3), each whereof is provided with an individual vibration pump (20) communicating to a tank (22) and supplying water to a heating chamber (24) which operates in an independent way.

EP 0 153 549 A1

./...

Croydon Printing Company Ltd.

Fig. 3

The presente invention relates to an instantaneously heated coffee machine, provided with one or more dispensing assemblies, and effective to be associated in more units and coupled to a coffee-milling device.

As it is known, there are presently made coffee machines, of the automatically heated type, provided with a dispensing assembly, and which are used, in addition to home environments, in offices, communities and the like.

The mentioned instantaneously heated coffee machines, as it should be apparent, are effective to meet only limited needs thereby, under large coffee demand conditions, they are to be replaced by other coffee machines, of the steam accumulating type, provided with a greater number of dispensing assemblies and of very high cost.

Moreover, with the mentioned coffee machines, there is usually associated a coffee mill, which, conventionally, represents an individual apparatus, having an inverted frustum of cone shape, arranged on a suitable supporting upright.

That coffee mill, as it should be apparent, because of its specifically designed structure, is not effective to neatly combine with the design of the coffee machine and, accordingly, is held as a separate unit from the latter.

Accordingly, the task of the present invention is to provide a coffee machine, of the instantaneously heated type, and hence of reduced cost, and a coffee milling device, which are effective to be easily used in two or more units to be mutually coupled, in such a way to provide a coffee machine including any desired numbers of coffee dispensing assemblies.

Within that task, it is an object of the present invention to provide a coffee-mill, including a coffee powder metering device, which is effective to substantially form an integral body with the coffee machine, to facilitate the loading of the filters.

According to one aspect of the present invention, the above task and object, as well as yet other objects, which will become more apparent thereinafter, are achieved by an instantaneously heated coffee machine, and a coffee-mill including a built-in coffee powder metering device, characterized in that they form a modular structure, of substantially parallelepipedal shape, having planar side walls of like

0153549

size, in such a way as to be effective to be coupled in an adjoining relationship in a plurality of units, depending on the user needs.

Further characteristics and advantages of the instantaneously heated coffee machine, and of the coffee mill including a built-in coffee powder metering device, according to the present invention, will become more apparent thereinafter, with reference to the several figures of the accompanying drawings, where:

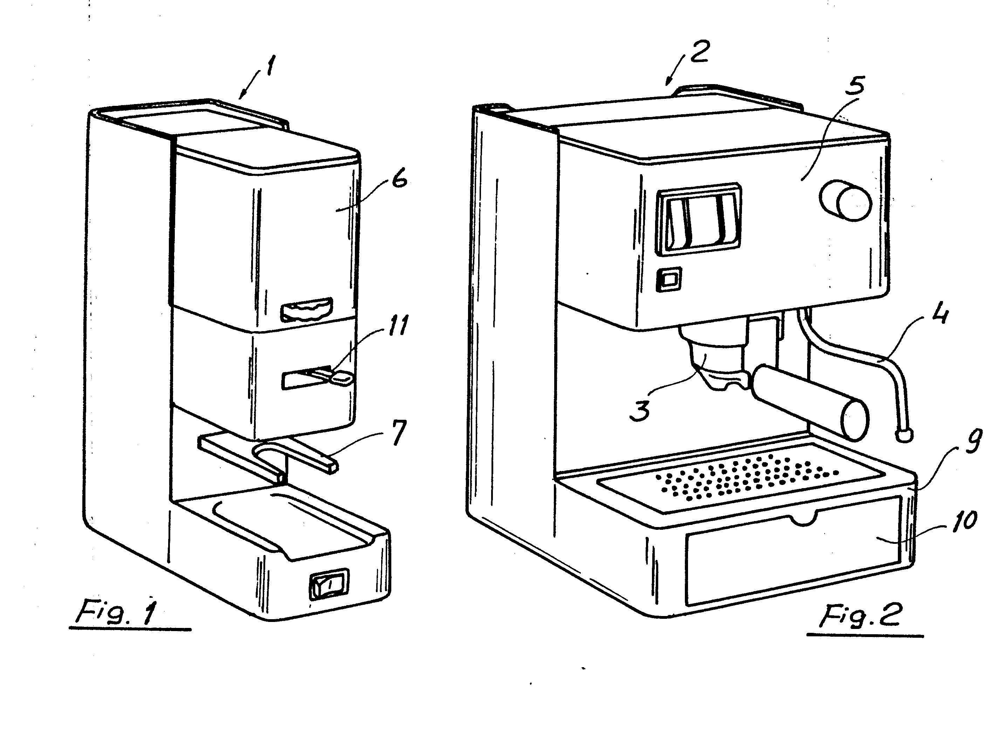

Fig. 1 is a perspective view illustrating the coffee mill including a coffee powder metering device according to the invention;

Fig. 2 illustrates the coffee machine, provided with a single dispensing assembly, which may be provided with a small metering drawer;

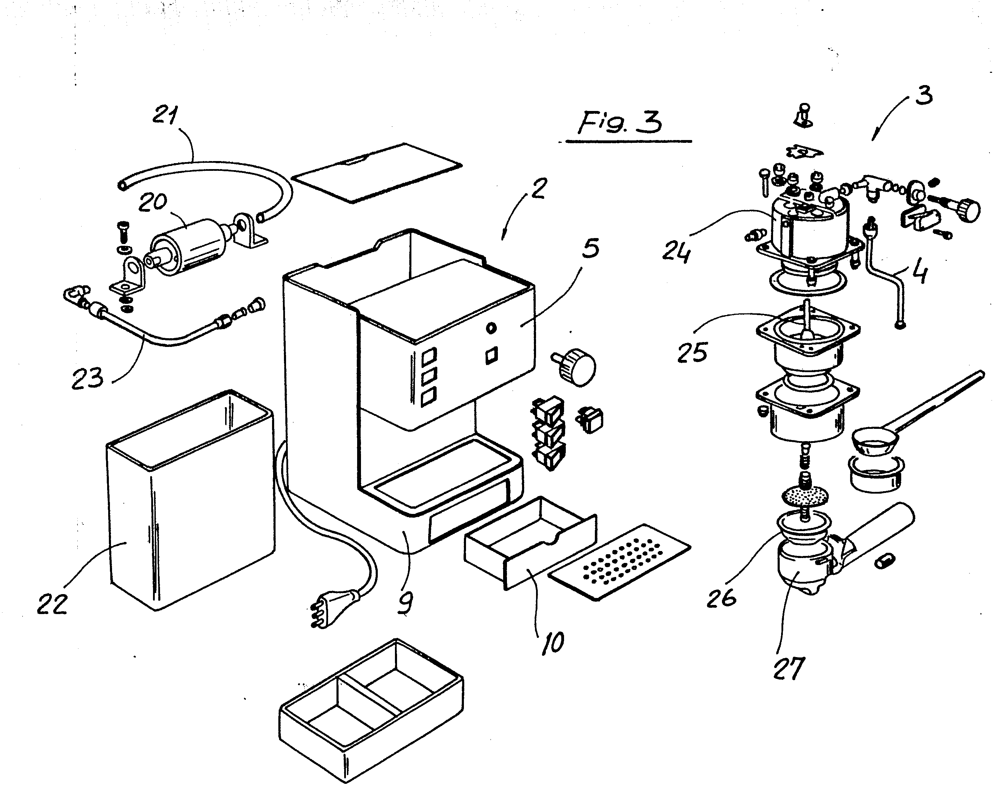

Fig. 3 is an exploded detail view illustrating the coffee machine of Fig. 2;

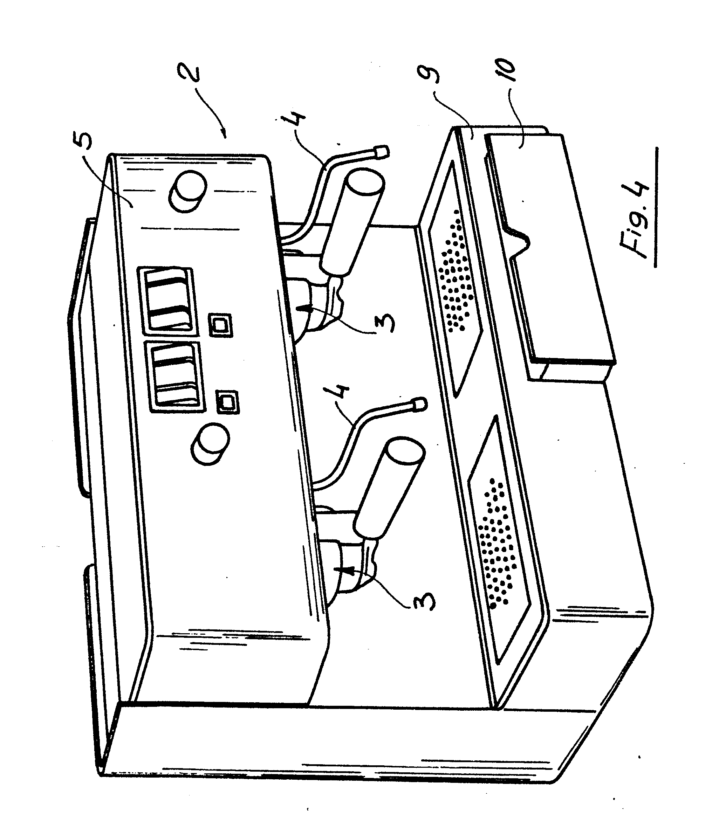

Fig. 4 illustrates a coffee machine provided with two dispensing assemblies, and which may be moreover provided with a coffee waste holding small drawer;

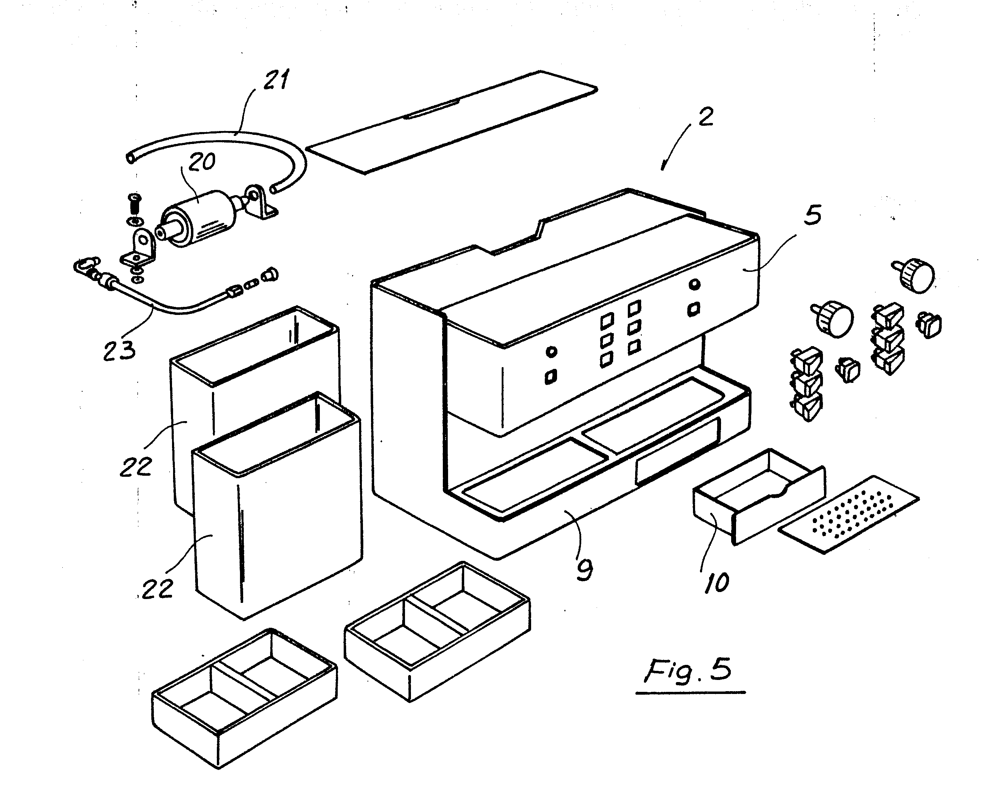

Fig. 5 is an exploded view illustrating the coffee machine of Fig. 4;

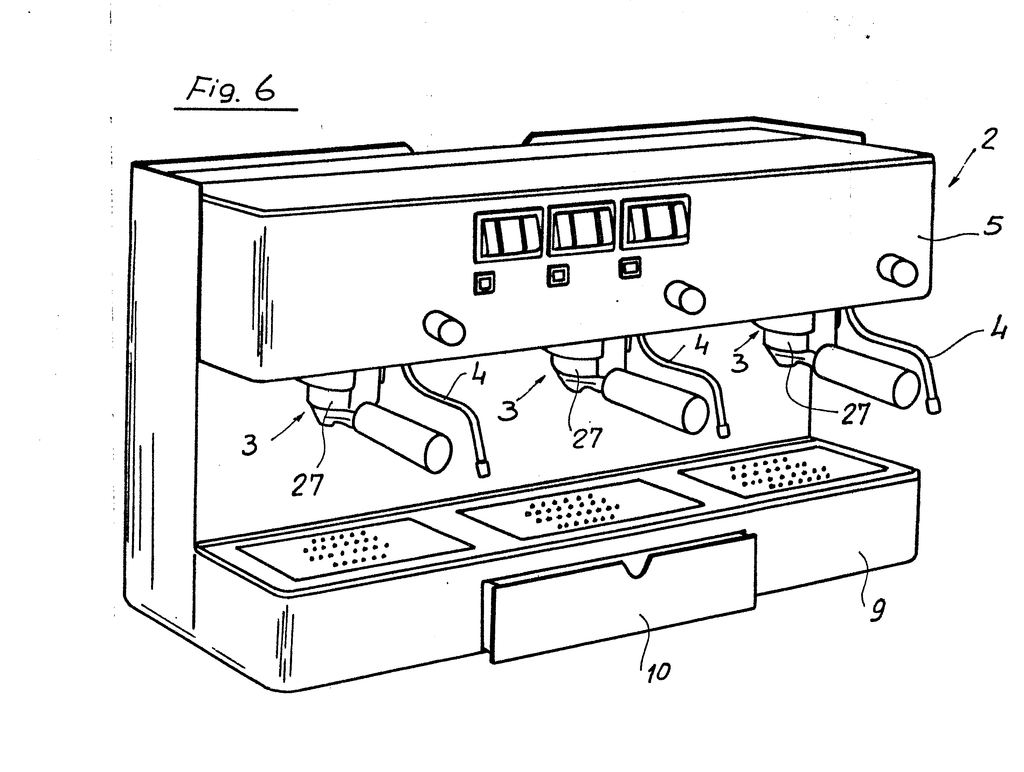

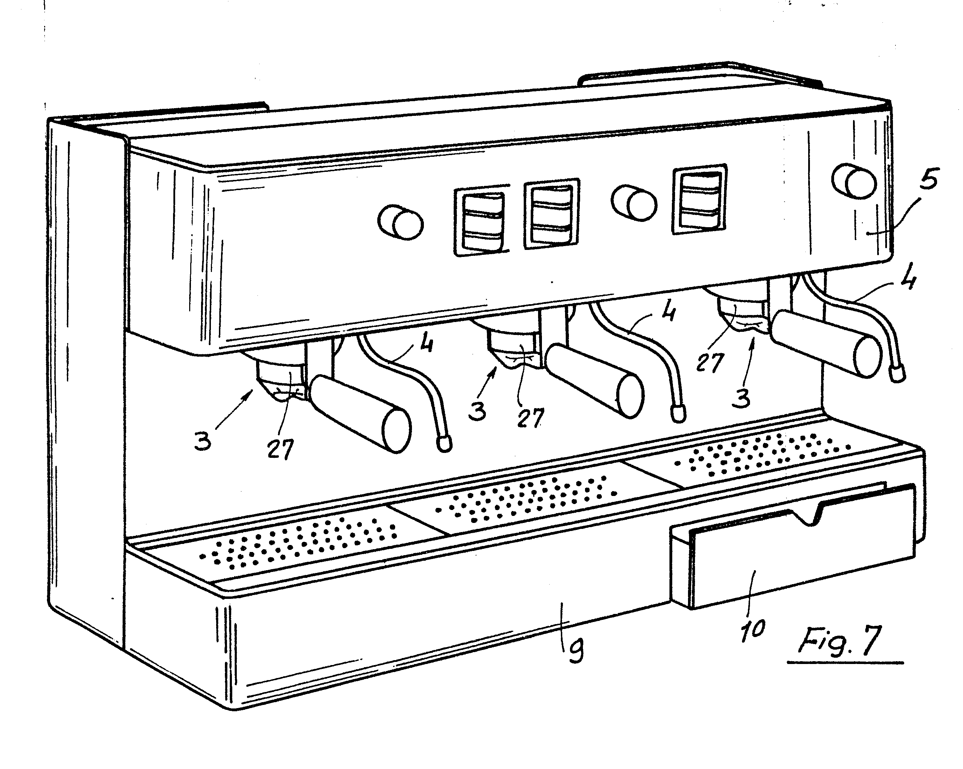

Figs. 6 and 7 illustrate a coffee

4

0153549

machine including three coffee dispensing assemblies or units; and

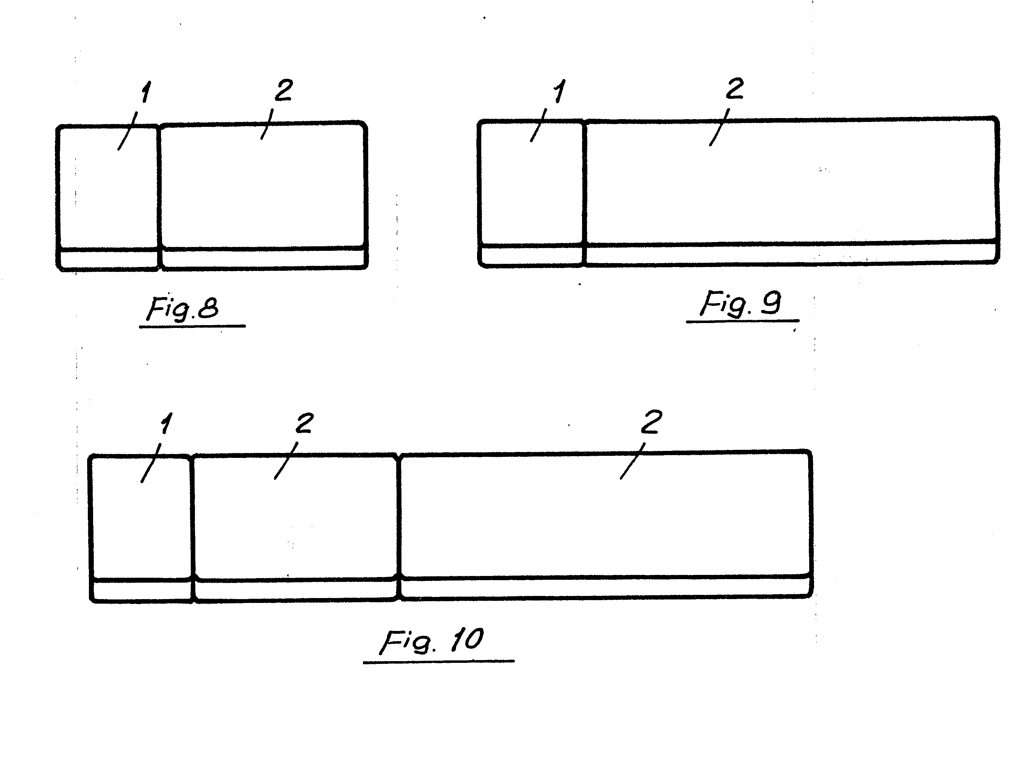

Figs. 8, 9 and 10 illustrate, schematically and from the top, some possible practical arrangements of the above mentioned instantaneously heated coffee machines and coffee mills.

With reference to the Figures of the accompabying drawings, the coffee mill 1 and coffee machine 2 'according to the invention are arranged in housings or casings of substantially parallelepipedal shape, having a different width and side walls of like size, in height and depth.

That approach affords the possibility of associating to a single coffee mill one or more coffee machines, while providing a compact structure susceptible to be easily modified as the needs change.

More specifically, the instantaneously heated coffee machine may be provided with one or more dispensing assemblies or units 3, including a related steam duct 4, as arranged at the bottom of a cantilevered parallelepipedal body 5 including suitable driving and control means.

It should be noted that, for each dispensing assembly or unit, the coffee machine is provided with a vibration type of pump 20, including a sucking duct 21 communicating with a tank 22.

The pump 20 is coupled, through a supplying duct 23, to a heating chamber 24, which is provided with a supplying valve 25 to adjust the inlet of the heated water supplied onto the coffee powder contained in the inter-exchangeable cup 26 housed in the filter holder 27.

Moreover, the coffee machine may be provided, at its bottom 9, with an exhausted coffee holding drawer 10.

The coffee mill, in turn, has its operative members included in a cantilever parallelepipedal body 6 thereunder there are provided a metering element 11 and a fork shaped member 7 to support the filters of the metering assemblies, during the filling therein of the milled coffee powder.

From the above disclosure it should be noted that the invention fully achieves the intended objects, and, in particular, it is to be pointed out that the provision of a coffee machine including a number of dispensing assemplies, each whereof is provided with an individual tank, supplying pump and independent heating assembly, af-

0153549

fords the possibility of obtaining a coffee machine of high output while providing a constructionally simple coffee machine.

While a preferred embodiment of the invention has been disclosed and illustrated, it should be noted that it is susceptible to many modifications and variations, all of which come within the scope of the invention.

In practicing the invention all of the details may be replaced by other technically equivalent elements.

CLAIMS

1. An instantaneously heated coffee machine, characterized in that it comprises an outer casing of substantially parallelepipedal shape having planar side walls to be adjoined to the outer casing of a coffee-mill (1), including side walls substantially equal to the side walls of said outer casing of said coffee machine (2).

2. An instantaneously heated coffee machine, according to Claim 1, characterized in that it is provided with at least a dispensing assembly (3), including its related steam duct (4), as arranged at the bottom of a cantilever parallelepipedal body 5, provided with driving and control members.

3. An instantaneously heated coffee machine, according to the preceding Claims, and comprising a plurality of dispensing assemblies or units (3), characterized in that each said dispensing assembly (3) includes a vibration type of pump (20) communicating with a tank (22), housed in said outer casing, and coupled to a heating chamber (24).

4. A coffee machine, according to one or more of the preceding Clims, characterized in that it comprises a coffee powder waste holding drawer member (10).

5. A coffee machine, according to Claim 1, characterized in that the operating members of said coffee machine are enclosed in a cantilevered parallelepipedal body (6) thereunder there is provided a fork member (7) effective to support the dispensing assembly filter, during the filling in of the milled coffee powder.

6. A coffee machine, according to the preceding Claims, characterized in that it comprises a metering device.

Fig. 1

Fig. 2

0153549

1/7

Fig. 3

21
20
23
22
2
5
9
10
3
24
4
25
26
27

0153549

Fig.4

*Fig.5*

0153549

Fig. 6

2

5

4

4

4

3

3

3

27

27

27

9

10

0153549

0153549

Fig. 7

**Fig.8**

1  2

**Fig. 9**

1  2

**Fig. 10**

1  2  2

7/7

0153549

European Patent
Office

# DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | FR-A-2 544 185   (NUOVA FAEMA SpA)<br>* Whole document * | 1,3 | A 47 J   31/42<br>A 47 J   31/36<br>A 47 J   31/24 |
| A | FR-A-2 440 720   (ESSEGIELLE S.r.l.)<br>* Whole document * | 1,2 | |
| A | FR-A-2 067 808   (STASSE)<br>* Claims 3-5 * | 3 | |
| A | FR-A-2 049 417   (ELIKAN)<br>* Whole document * | 4-6 | |
| A | FR-A-2 522 951   (LLOVERAS MONGE)<br>* Whole document * | 1,5,6 | |
| A | GB-A-2 063 101   (N.V. PHILIPS) | | TECHNICAL FIELDS<br>SEARCHED (Int. Cl.4)<br><br>A 47 J |
| A | FR-A-2 209 530   (SÜDDEUTSCHE METALLWERKE) | | |

The present search report has been drawn up for all claims

| Place of search<br>THE HAGUE | Date of completion of the search<br>03-05-1985 | Examiner<br>SCHARTZ J. |
|---|---|---|